# EUROPÄISCHE PATENTSCHRIFT

(11) **EP 0 771 963 B1**
(45) Veröffentlichungstag und Bekanntmachung des Hinweises auf die Patenterteilung: **12.05.1999**
(21) Anmeldenummer: 96890142.1
(22) Anmeldetag: 16.09.1996
(51) Int. Cl.: F16D 23/06

(54) **Synchronring mit Ringfeder**
Synchronring with annular spring
Anneau de synchronisation avec ressort annulaire

(30) Priorität: 30.10.1995 AT 1786/95
(43) Veröffentlichungstag der Anmeldung: 07.05.1997
(73) Patentinhaber: HOERBIGER Antriebstechnik GmbH, 86956 Schongau (DE)
(72) Erfinder: Soffa, Franz, 86977 Burggen (DE); Giese, Manfred, Dipl.-Ing., 82229 Hechendorf-Seefeld (DE)
(74) Vertreter: Pinter, Rudolf, Dipl.-Ing.

(56) Entgegenhaltungen:
- EP-A- 0 167 319
- DE-C- 933 364
- US-A- 3 247 937

## Beschreibung

Die Erfindung betrifft einen Synchronring mit Ringfeder, für eine Synchronisierungseinrichtung für Schaltgetriebe, mit zumindest drei, umfangsmäßig voneinander beabstandeten Auflageelementen am Synchronring für die im wesentlichen spielfrei auf diesen aufliegende Ringfeder.

Synchronisierungseinrichtungen für Schaltgetriebe, und hier insbesonders für solche von Kraftfahrzeugen, sind heutzutage zumeist mit am Außenumfang des im wesentlichen scheibenförmigen Synchronkörpers angeordneten Schiebemuffen versehen, deren zur Einleitung eines Schaltvorganges durchgeführte seitliche Verstellung vorerst ein reibschlüssiges Zusammenwirken des mit dem Synchronkörper bzw. der Antriebswelle gekoppelten Synchronringes mit einer zugeordneten Reibfläche, die mit dem anzutreibenden Zahnrad in Verbindung-steht, bewirkt, wodurch die erforderliche Drehzahlangleichung vor dem formschlüssigen Zusammenkoppeln erfolgt. Die die axiale Verstellung der Synchronringe zur Einleitung der reibschlüssigen Koppelung einleitenden Verstellkörper bzw. Gleitsteine sind bei derartigen bekannten Anordnungen zumeist über drei umfangsmäßig um 120° beabstandet angeordnete Federstifte, Schraubenfedern o.dgl. an den Synchronkörpern abgestützt, womit die formschlüssige Koppelung zuverlässig erst nach der Drehzahlangleichung über die reibschlüssige Koppelung erfolgt.

Um den Nachteil der komplizierten und vielteiligen Ausführung mit den erwähnten umfangsmäßig beabstandet 3-fach gegenüber den Synchronkörpern abgestützten Verstellelementen zu vermeiden, sind speziell in letzter Zeit Ausführungen von Synchronisierungseinrichtungen mit Synchronringen der eingangs genannten Art bekannt geworden (siehe dazu beispielsweise US-PS 3 700 083 bzw. US-PS 4 732 247 oder US-PS 5 105 927), bei denen die am Synchronring aufliegende Ringfeder zur Einleitung der reibschlüssigen Koppelung durch die äußere Schiebemuffe bzw. einen ähnlichen Teil dient. Nach Überwindung der Federkraft zwischen den umfangsmäßig voneinander beabstandeten Auflageelementen kann ähnlich wie oben beschrieben die formschlüssige Koppelung erfolgen.

So zeigt die EP-0 167 319 A1 eine Synchronisationsvorrichtung, bei der auf den Blockier- oder Synchronring ein ringförmiger Bauteil mit lediglich drei elastisch verformbaren Abschnitten über seinen gesamten Umfang aufgebracht ist. Die drei elastisch verformbaren Abschnitte der Feder dienen nicht der Anpassung von Feder und Synchronring und damit dem Ausgleich von Herstellungstoleranzen dieser Bauteile, sondern sollen die kraftschlüssige Verbindung des Synchronringes mit der darübergleitenden Schiebehülse herstellen.

Obwohl bei derartigen Anordnungen in sehr vorteilhafter Weise mit wesentlich weniger Bauteilen das Auslangen gefunden wird, was Herstellung, Montage und Wartung sehr vereinfacht, geht damit doch andererseits der Nachteil einher, daß für eine zuverlässige Funktion der Synchronisierungseinrichtung ein sehr genaues Zusammenwirken von Ringfeder, Auflageelementen und Verstellelement erforderlich ist, da ansonsten die Gefahr besteht, daß die für die Funktion wesentliche reibschlüssige Vorsynchronisation nicht oder nicht ausreichend erfolgt. Dies bedingt in der Praxis zumeist, daß die tatsächlich zusammen eingebauten Synchronringe und Ringfedern entweder paarweise zusammenpassend ausgesucht oder aber nicht minder aufwendig mit kleinen Toleranzen maßhaltig bearbeitet, beispielsweise geschliffen werden müssen.

Aufgabe der vorliegenden Erfindung ist es, eine Einheit von Synchronring mit Ringfeder der eingangs genannten Art so zu verbessern, daß die oben angesprochenen Nachteile der bekannten derartigen Ausführungen vermieden werden und daß insbesonders Herstellung und Montage derartiger Anordnungen ohne Funktionsbeeinträchtigung vereinfacht werden.

Diese Aufgabe wird gemäß der vorliegenden Erfindung bei einer Anordnung der eingangs genannten Art mit geschlossenen Ringfedern dadurch gelöst, daß die Anlagebereiche der Auflageelemente am Synchronring zumindest radial verstellbar sind. Damit ist der Ausgleich von Herstellungstoleranzen schon bei der Montage relativ einfach zu bewerkstelligen und es kann nun auf sehr einfache Weise beim jeweiligen Zusammenbau von Synchronring und Ringfeder sichergestellt werden, daß die erforderliche Genauigkeit hinsichtlich Abmessungen und gegebenenfalls auch Federkräften leicht und einfach erreichbar ist. Vorzugsweise sind die Anlagebereiche der Auflageelemente am Synchronring bei der Montage bleibend verformbar.

Bei Synchronringen aus Vollmaterial sind dazu in vorteilhafter Weise die Anlagebereiche der Auflageelemente bei der Montage der Ringfeder durch seitliche bzw. von innen her wirkende Deformation der Auflageelemente an die Ringfeder anpaßbar. Bei Synchronringen als Blechumformteil können in entsprechend bevorzugter Ausgestaltung der Erfindung die Auflageelemente bei der Umformung des Synchronringes ausgebildet bzw. durch eine seitlich wirkende Deformation hergestellt und in einem der Umformschritte an die aufgelegte Ringfeder anpaßbar sein.

Es kann mit diesen beschriebenen Maßnahmen auf sehr einfache Weise das erforderliche Zusammenpassen von montierter Ringfeder mit Synchronring sichergestellt werden, ohne daß dazu komplizierte Auswahlverfahren bzw. toleranzmäßige Feinbearbeitungen der Bauteile erforderlich wären.

Bei einer Anordnung der eingangs genannten Art mit offenen Ringfedern wird gemäß einer anderen Ausgestaltung der Erfindung vorgesehen, daß zum Ausgleich von Herstellungstoleranzen die offenen Enden der Ringfeder bei der Montage durch umfangsmäßige Anpassung an die Anlagebereiche der Auflageelemente relativ zueinander verstellbar und am Synchronring fixierbar sind. Zur Fixierung der Enden der offenen Ringfeder können gemäß einer entsprechend vorteilhaften Weiterbildung bleibend verformbare Haltebereiche am Synchronring vorgesehen sein.

Es ist mit diesen Ausbildungen sichergestellt, daß auch die hinsichtlich Herstellung und Montage einfacher zur handhabenden offenen Ringfedern entsprechend vorteilhaft gemäß der Grundidee der vorliegenden Erfindung verbessert eingesetzt werden können.

In besonders vorteilhafter Weise ist dabei die Ringfeder auf Auflageelementen gemäß einer der oben beschriebenen Ausführungen gehalten.

Gemäß einer besonders bevorzugten Ausgestaltung der Erfindung ist vorgesehen, daß die Ringfeder mittels eines bleibend verformten Haltebereiches auf dem Synchronring unter Bildung einer Baugruppe unverlierbar gehalten ist. Auf diese Weise kann die Montage bzw. der Zusammenbau der gesamten Synchronisierungseinrichtung sehr vereinfacht werden, da damit nur mehr eine einzelne Baugruppe, ohne die Gefahr von Montagefehlern, gehandhabt werden muß.

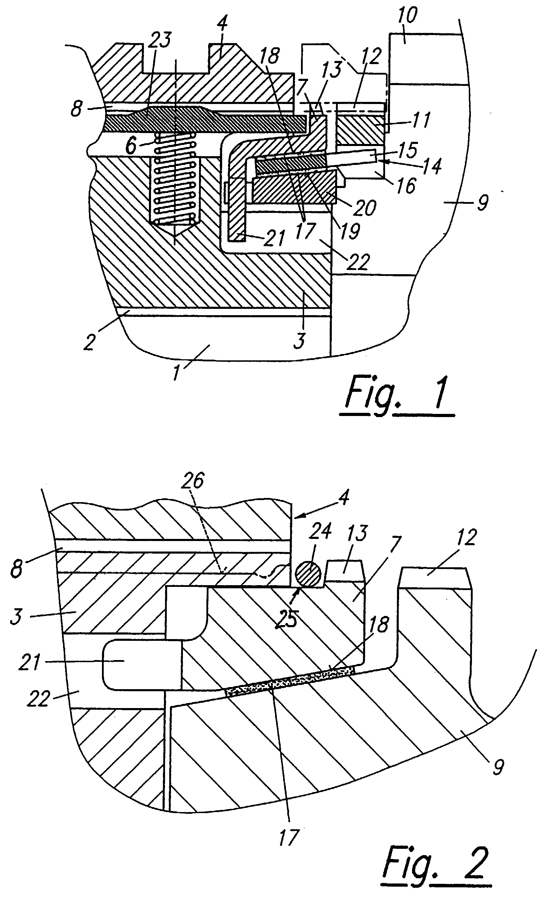

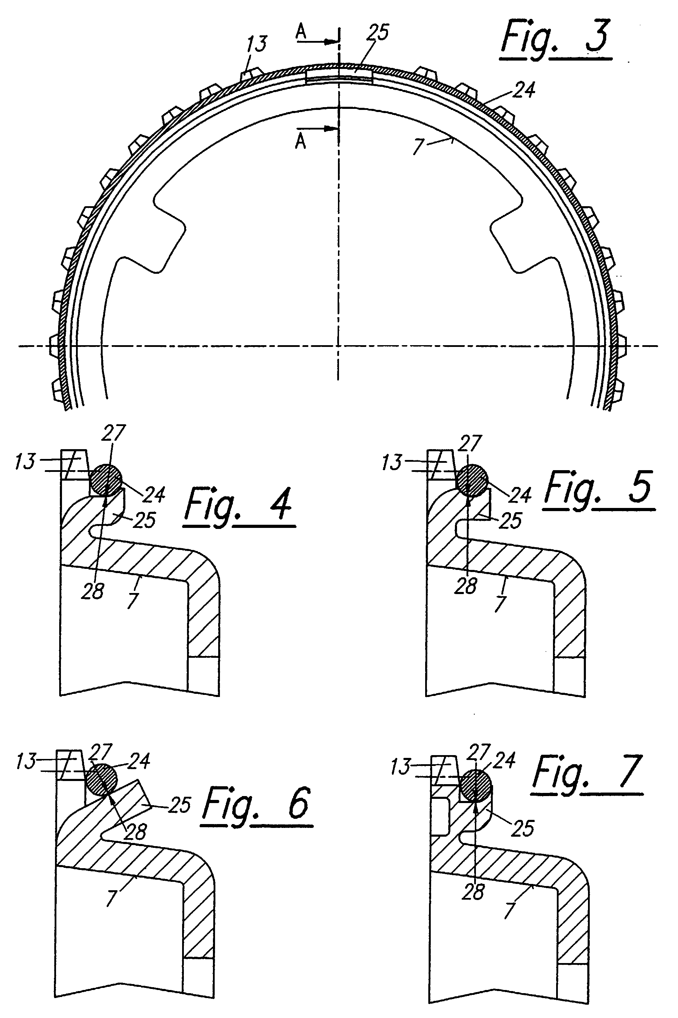

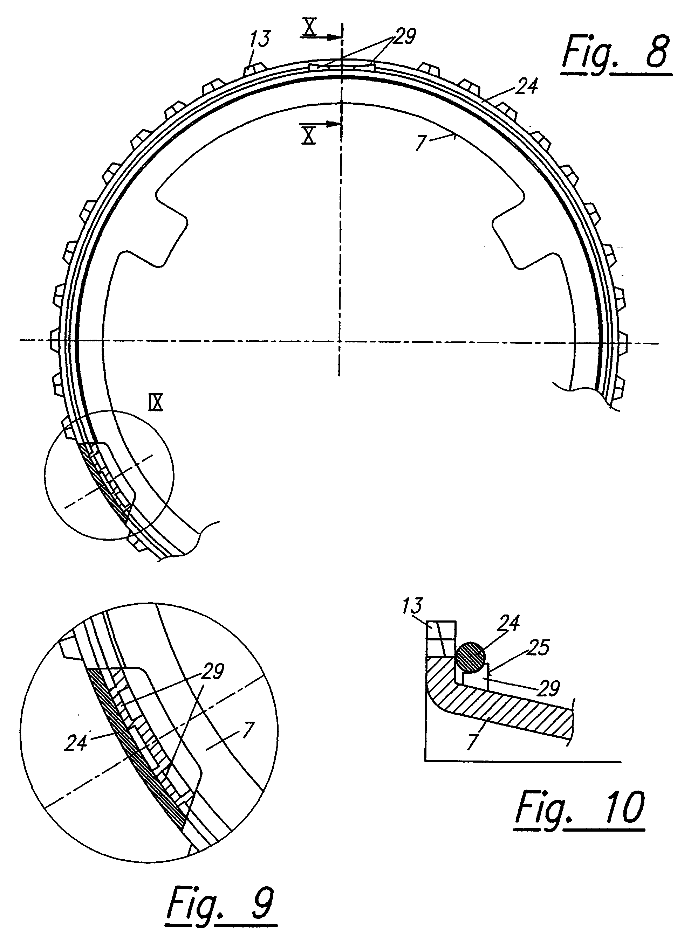

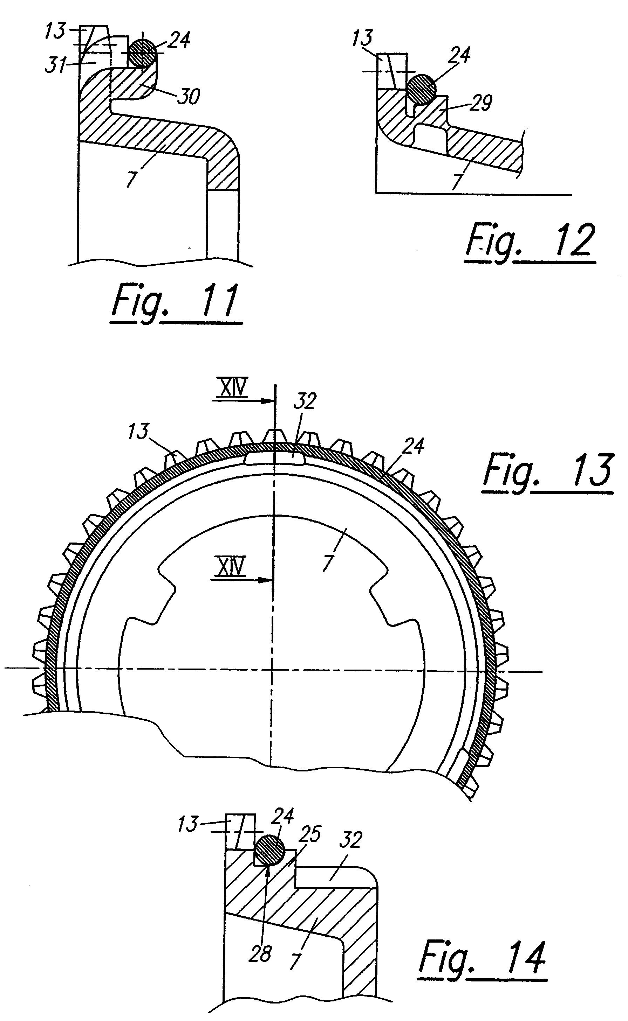

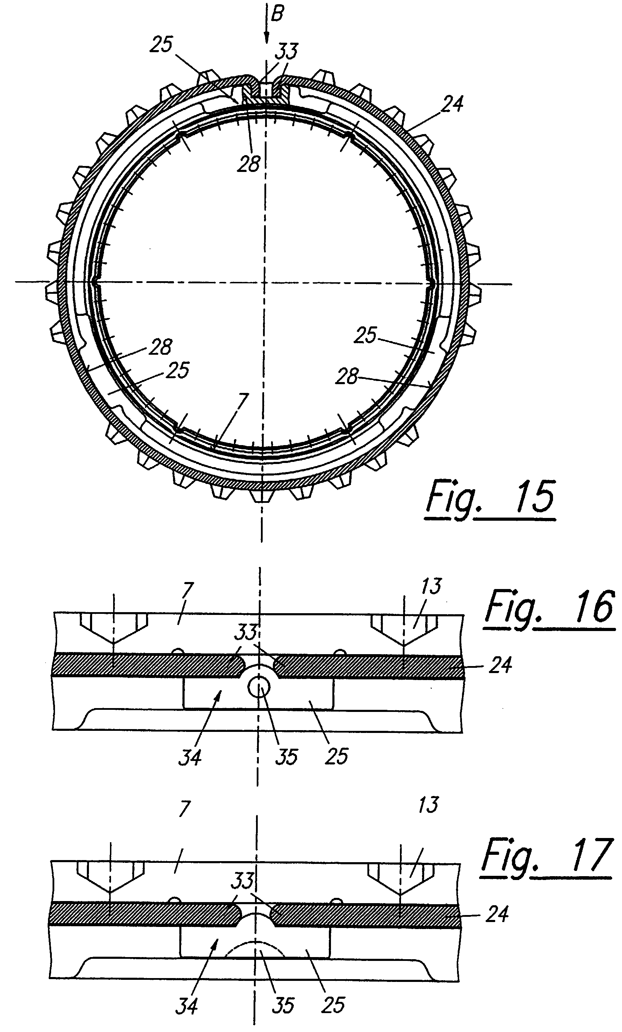

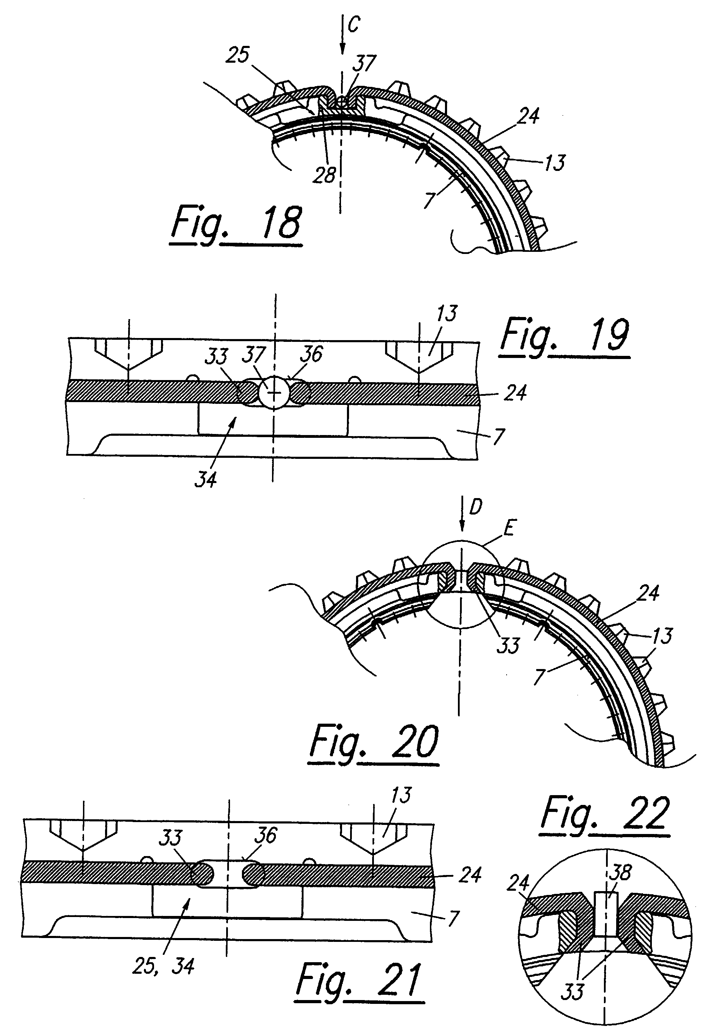

Die Erfindung wird im folgenden noch an Hand der in der Zeichnung teilweise schematisch dargestellten Ausführungsbeispiele näher erläutert. Fig. 1 zeigt dabei einen teilweisen Schnitt durch ein Ausführungsbeispiel einer Synchronisierungseinrichtung für Schaltgetriebe, Fig. 2 ebenfalls einen teilweisen Schnitt durch eine andere Ausführung einer derartigen Synchronisierungseinrichtung nach dem Stande der Technik, wobei hier ein Synchronring mit Ringfeder gemäß der Gattung der vorliegenden Erfindung Verwendung findet, Fig. 3 eine teilweise Ansicht einer gemäß der vorliegenden Erfindung ausgeführten Einheit von Synchronring mit Ringfeder zur Verwendung beispielsweise in einer Anordnung ähnlich wie in Fig. 2, Fig. 4 bis 7 zeigen unterschiedliche Ausführungsvarianten nach der Erfindung in einem Schnitt entlang der Linie A-A in Fig. 3, Fig. 8 zeigt ein weiteres Ausführungsbeispiel nach der vorliegenden Erfindung in einer der Fig. 3 entsprechenden Ansicht, Fig. 9 zeigt das vergrößerte Detail IX in Fig. 8, Fig. 10 einen teilweisen Schnitt entlang der Linie X-X in Fig. 8, Fig. 11 und Fig. 12 zeigen unterschiedliche Varianten zu Fig. 10 in entsprechender Darstellung, Fig. 13 ein weiteres Ausführungsbeispiel nach der Erfindung in teilweiser Ansicht, Fig. 14 den vergrößerten teilweisen Schnitt entlang der Linie XIV-XIV in Fig. 13, Fig. 15 ein weiteres Ausführungsbeispiel nach der Erfindung in teilweise geschnittener Ansicht, Fig-. 16 und Fig. 17 unterschiedliche Varianten der Ausbildung jeweils vergrößert und in Teilansicht entlang des Pfeiles B in Fig. 15, Fig. 18 einen teilweisen Schnitt durch ein weiteres Ausführungsbeispiel nach der Erfindung, Fig. 19 eine vergrößerte Teilansicht entlang des Pfeiles C in Fig. 18, Fig. 20 ein anderes Ausführungsbeispiel nach der Erfindung in beispielsweise der Fig. 18 entsprechendem Teilschnitt, Fig. 21 eine vergrößerte Teilansicht entlang des Pfeiles D in Fig. 20 und Fig. 22 das vergrößerte Detail E aus Fig. 20.

Die in Fig. 1 dargestellte Synchronisierungseinrichtung weist einen auf einer Getriebewelle 1 mittels einer Verzahnung 2 drehfest angeordneten Synchronkörper 3 auf, welcher an seinem Außenumfangmit einer Schiebemuffe-4 versehen ist, in die ein hier nicht dargestellter Schalthebel eingreift und die mit einer aus Bolzen und Feder 6 bestehenden Rastierung versehen ist. Weiters ist an der Seite des Synchronkörpers 3 ein Außensynchronring 7 angeordnet, der an seinem Außenumfang entsprechend einer inneren Verzahnung 8 der Schiebemuffe 4 verzahnt ist. Auf der Getriebewelle 1 ist ein Gangrad 9 frei drehbar angeordnet, welches an seinem Außenumfang eine Verzahnung 10 aufweist. Mit dem Gangrad 9 ist auf der dem Synchronkörper 3 zugewandten Seite eine ringförmige Kupplungsscheibe 11 drehfest verbunden, die mit einer Außenverzahnung 12 versehen ist, die bei entsprechender Verschiebung der Schiebemuffe 4 in die strichpunktiert eingezeichnete Lage ebenso wie die Außenverzahnung 13 des Außensynchronringes 7 mit der inneren Sperrverzahnung 8 der Schiebemuffe 4 zusammenwirkt.

Die Kupplungsscheibe 11 sitzt drehfest form- oder kraftschlüssig (z.B. Verzahnung, Laserschweißung usw.) auf einem entsprechenden Ansatz des Gangrades 9 und steht mit dem Synchronkörper 3 über eine bedarfsweise ein- bzw. ausrückbare Reibungskupplung in Verbindung. Diese weist einen Reibring 14 auf, der einen eigenen Bauteil bildet und mit an seiner im Durchmesser größeren Seite vorragenden Mitnahmenocken 15 in dazupassende Ausnehmungen 16 der Kupplungsscheibe 11 eingreift. An jeder konischen Außen- und Innenfläche ist der Reibring 14 hier mit einem beispielsweise aufgesinterten Reibbelag 17 versehen, der mit entsprechenden konischen Reib- bzw. Kupplungsflächen 18, 19 des Außensynchronringes 7 bzw. eines zusätzlichen Innensynchronringes 20 zusammenwirkt.

Der Außensynchronring 7 ist hier als tiefgezogener Blechteil ausgebildet, der an seinem Außenumfang die erwähnte Außenverzahnung 13 und im mittleren Bereich die konische Reibfläche bzw. Kupplungsfläche 18 trägt. Am Innenumfang sind im Bereich des tiefgezogenen Bodens zur formschlüssigen, drehfesten Verbindung mit dem Synchronkörper 3 ausgestanzte Mitnahmenocken 21 vorgesehen, die in entsprechende Ausnehmungen 22 des Synchronkörpers 3 eingreifen. Über diese Mitnahmenocken 21 bzw. auch weitere hier nicht ersichtliche kürzere Kupplungsnocken des Außensynchronringes 7 ist hier gleichzeitig auch der Innensynchronring 20 mit dem Synchronkörper 3 gekoppelt, was eine für viele Verwendungszwecke vorteilhafte, sogenannte Doppelsynchronisierung ergibt. An der in der Darstellung linken Seite des Synchronkörpers 3 könnte eine gleiche bzw. ähnliche Anordnung zur Synchronisierung eines weiteren Gangrades auf der Getriebewelle 1 angeordnet sein.

Wenn die Schiebemuffe 4 unter Überwindung der aus dem Bolzen und der Feder 6 gebildeten Rastierung beispielsweise gegen das Gangrad 9 hin verschoben wird, so nimmt sie den Außensynchronring 7 über die Gleitsteine 23 mit, der nach kurzer Verschiebung mit seiner Kupplungsfläche 18 auf die mit dem Reibbelag 17 versehene Reibfläche des Reibringes 14 auftrifft. Dadurch wird der Reibring 14 auch etwas in der Darstellung nach rechts verschoben, sodaß auch der gegenüberliegende Reibbelag 17 auf der Innenseite des Reibringes 14 mit dem Innensynchronring 20 in reibschlüssigen Kontakt kommt. Es wird ein Reibmoment aufgebaut (Vorsynchronisation), hervorgerufen durch die federbelasteten Gleitsteine 23, so daß der Außensynchronring 7 relativ zum Synchronkörper 3 in die für die Hauptsynchronisation notwendige Position gelangt. Über die Schiebemuffen-/Synchronringverzahnung erfolgt dann die Anpassung der Drehzahl, also die Hauptsynchronisation.

Die die eigentliche axiale Verstellung der Synchronringe 7 bzw. 20 zur Einleitung der reibschlüssigen Koppelung einleitenden bzw. sperrenden Elemente sind bei derartigen bekannten Anordnungen zumeist über drei umfangsmäßig um 120° beabstandete angeordnete Federstifte, Schraubenfedern, o.dgl. am Synchronkörper 4 abgestützt, was eine relativ komplizierte und vielteilige Ausführung ergibt.

Um die diesbezüglichen Nachteile der oben beschriebenen Ausführung zu vermeiden, sind speziell in letzter Zeit Ausführungen von Synchronisierungseinrichtungen mit Synchronringen der eingangs angesprochenen Art bekannt geworden, bei denen gemäß Fig. 2 eine am Synchronring 7 aufliegende Ringfeder 24 zur Einleitung der reibschlüssigen Koppelung durch die äußere Schiebemuffe 4 des Synchronkörpers 3 bzw. einen ähnlichen Teil dient. Nach Überwindung der Federkraft zwischen den umfangsmäßig voneinander beabstandeten Auflageelementen kann ähnlich wie oben beschrieben die formschlüssige Koppelung zwischen Synchronkörper 3 und Gangrad 9 erfolgen.

Es ist dazu anzumerken, daß die Schnittführung gemäß Fig. 2 im Bereich des Außensynchronringes 7 durch eines von beispielsweise drei umfangsmäßig um jeweils 120° beabstandet angeordneten Auflageelementen 25 am Synchronring 7 erfolgt - zwischen den beabstandeten Auflageelementen 25 ist die Ringfeder 24 gegenüber dem Synchronring 7 freigestellt und kann sich unter der Wirkung von erhöhten, verlängerten Zähnen 26 an der bereichsweise ausgenommenen inneren Verzahnung 8 der Schiebemuffe 4 radial nach innen verformen, wonach erst die Schiebemuffe zur formschlüssigen Koppelung der Verzahnungen 8, 13 und 12 in der Darstellung ganz nach rechts bewegt werden kann.

Obwohl mit dieser bekannten Art der Vorsynchronisierung gemäß Fig. 2 gegenüber der Ausführung nach Fig. 1 mit wesentlich weniger Bauteilen das Auslangen gefunden wird, was Herstellung, Montage und Wartung naturgemäß sehr vereinfacht, geht damit nun doch andererseits der Nachteil einher, daß für eine zuverlässige Funktion speziell der Vorsynchronisierung ein sehr genaues. Zusammenwirken von Ringfeder 24, Auflageelementen 25, und Schiebemuffe 4 erforderlich ist, da ansonsten die Gefahr besteht, daß die reibschlüssige Vorsynchronisation nicht oder nicht ausreichend erfolgt. Dies bedingt bisher in der Praxis, daß die tatsächlich zusammen eingebauten Synchronringe und Ringfedern entweder paarweise zusammenpassend ausgesucht oder aber nicht minder aufwendig mit kleinen Toleranzen maßhaltig bearbeitet, beispielsweise geschliffen werden müssen.

Um dies zu vermeiden ist nun beispielsweise gemäß den in den Fig. 3 bis 7 dargestellten Ausführungen von Synchronringen 7 mit Ringfedern 24 vorgesehen, daß die unmittelbaren gegenseitigen Anlagebereiche 27, 28 von Auflageelementen 25 und Ringfeder 24 zum Ausgleich von Herstellungstoleranzen bei der Montage relativ zueinander einstellbar sind. Dies kann beispielsweise wie dargestellt dadurch erfolgen, daß die Anlagebereiche 28 der Auflageelemente 25 am Synchronring 7 zumindest radial verstellbar, vorzugsweise bei der Montage bleibend verformbar, sind.

Bei der in den Fig. 3 bis 7 bzw. auch 8 bis 12 dargestellten Ausführung des Synchronringes 7 als Blechumformteil mit geschlossener Ringfeder 24 können die Auflageelemente 25 bevorzugt in einem Zwischen- oder Endschritt der Umformung des Synchronringes 7 ausgebildet und/oder an die aufgelegte Ringfeder 24 angepaßt werden. Bevorzugt wird bei diesem Umformschritt darauf hingewirkt, daß die Ringfeder 24 mittels eines bleibend verformten Haltebereiches, der auch gleichzeitig der oben angesprochene Anlagebereich am Auflageelement sein kann, auf dem Synchronring 7 unter Bildung einer Baugruppe unverlierbar gehalten ist.

Zu den einzelnen Varianten gemäß Fig. 3 bis 12 ist folgendes anzumerken:

Gemäß Fig. 4 werden am Außendurchmesser des Synchronringes 7 zwischen zwei Zähnen der Sperrverzahnung 13 mehrere Laschen als Auflageelemente 25 so auf die Seite der hier nicht dargestellten Schiebemuffe gebogen, daß die Ringfeder (welche hier, aber nicht notwendigerweise, runden Querschnitt aufweist) radial zentriert und im Zusammenwirken mit der Sperrverzahnung bzw. Zahnkranzanlagefläche axial fixiert wird.

Gemäß Fig. 5 werden ähnlich wie nach Fig. 4 mehrere über den Umfang verteilte Laschen als Auflageelemente 25 zur Seite der Schiebemuffe hin umgebogen. Im Gegensatz zu Fig. 4 wird nun in mehrere bzw. alle Laschen zusätzlich eine Nut eingeprägt, die die Zentrierung und axiale Positionierung der Ringfeder 24 gewährleistet.

Gemäß Fig. 6 werden am Synchronring 7 über den Umfang verteilt angeordnet mehrere Laschen als Auflageelemente 25 schräg zur Seite der Schiebemuffe hin in der Weise gebogen, daß die Ringfeder 24 sowohl zentrisch als auch im Zusammenwirken mit der Sperrverzahnung bzw. der Zahnkranzanlagefläche axial positioniert wird.

Gemäß Fig. 7 werden am Zahnkranzsteg des Synchronringes 7 von der Seite des nicht dargestellten Gangrades her zur Seite der Schiebemuffe hin (also in der Darstellung von links nach rechts) azimutal verteilt mehrere Nocken als Auflageelemente 25 durch Prägen derart geformt, daß sie die Ringfeder 24 von an sich beliebigem Querschnitt zentrieren und zusammen mit der Zahnkranzanlagefläche axial festlegen.

Bei der Ausführung nach Fig. 10 werden - wie insbesonders auch aus Fig. 8 und 9 ersichtlich ist - paarweise über den Umfang des Synchronringes 7 verteilt mehrere Nocken 29 als Auflageelemente 25 durch Prägen von der Konusinnenseite nach außen geformt. Die Aufgabe dieser Nocken 29 besteht in der gezielten Positionierung, Zentrierung und - zusammen mit der Zahnkranzanlagefläche - axialen Festlegung der Ringfeder 24.

Gemäß Fig. 11 sind zumindest drei Laschengruppen über den Umfang des Synchronringes 7 verteilt angeordnet, wobei jede der Laschengruppen aus drei einzelnen Laschen 30, 31 besteht, die am Außenumfang des Synchronringes 7 in Richtung Schiebemuffe (hier nach rechts) gebogen sind. Die beiden äußeren Laschen 30 sind dabei so geformt, daß sie die Ringfeder 24 sowohl zentrieren als auch axial positionieren. Die mittlere gebogene Lasche 31 jeder Gruppe übernimmt nur die Funktion der axialen Festlegung der Ringfeder 24.

Gemäß Fig. 12 ist ähnlich wie in Fig. 10 ein Halten und Zentrieren der Ringfeder 24 mittels einer geprägten Nocke 29 erreicht, wobei aber hier nun nur jeweils eine Nocke anstelle des Nockenpaares gemäß Fig. 10 am Außenkonus des Synchronringes 7 ausgeprägt wird.

Bei der Ausführung nach den Fig. 13 und 14 handelt es sich um einen Synchronring 7 aus Vollmaterial mit geschlossener Ringfeder 24, der sowohl als Blechumformring als auch aus Vollmaterial gefertigt sein kann, wobei die Anlagebereiche 28 der Auflageelemente 25 bei der Montage der Ringfeder 24 durch seitlich wirkende Deformation der Auflageelemente 25 an die Ringfeder 24 anpaßbar sind. Die Auflageelemente 25 werden hier durch Prägen bzw. durch Verdrängen von Material aus dem Bereich 32 axial nach links erzeugt.

Bei den Ausführungen nach Fig. 15 bis 22 sind Synchronringe 7 mit offener Ringfeder 24 dargestellt, wobei die offenen Enden der Ringfeder 24 bei der Montage auf dem Synchronring 7 zur umfangsmäßigen Anpassung an die Anlagebereiche 28 der Auflageelemente 25 relativ zueinander verstellbar und am Synchronring 7 fixierbar sind. Zur Fixierung der Enden 33 der offenen Ringfeder 24 sind jeweils bleibend verformbare Haltebereiche 34 am Synchronring 7 vorgesehen.

Gemäß Fig. 15 und 16 sind die Enden 33 der Ringfeder 24 mittels Verprägen (Einprägung 35) des das Auflageelement 25 bildenden Haltebereiches 34 fixiert, wobei eine in ihrer Funktion quasi wiederum geschlossene Ringfeder 24 entsteht. Die gemäß Fig. 16 radial von oben her vorgenommene Einprägung 35 ist gemäß Fig. 17 ersetzt durch eine axial von der Seite her vorgenommene derartige Einprägung. In beiden Fällen werden die Enden 33 der Ringfeder 24 in der vorher langlochartigen Aufnahme fixiert.

Gemäß Fig. 18 und 19 kann eine derartige Fixierung der Enden 33 der Ringfeder 24 in einer langlochartigen Aufnahme 36 des Haltebereiches 34 auch dadurch erreicht werden, daß ein Einpreßkörper 37 nach dem Einhängen der Ringfeder zwischen deren Enden eingepreßt wird. Dieser Einpreßkörper 37 kann beispielsweise als Kugel, Stift, Kegel usw. ausgebildet sein.

Gemäß Fig. 20 bis 22 können die Enden 33 der Ringfeder 24 in der langlochartigen Aufnahme 36 bei der Montage entweder von innen gekröpft oder aber mittels eines zusätzlichen Stiftes 38 (siehe Fig. 22) fixiert werden.

## Patentansprüche

1. Synchronring (7) mit geschlossener Ringfeder (24), für eine Synchronisierungseinrichtung für Schaltgetriebe, mit zumindest drei umfangsmäßig voneinander beabstandeten Auflageelementen (25) am Synchronring (7) für die im wesentlichen spielfrei auf diesen aufliegende Ringfeder (24), dadurch gekennzeichnet, daß die unmittelbaren Anlagebereiche (28) der Auflageelemente (25) für die Ringfeder (24) zum Ausgleich von Herstellungstoleranzen bei der Montage zumindest radial verstellbar sind.

2. Synchronring nach Anspruch 1, dadurch gekennzeichnet, daß die Anlagebereiche (28) der Auflageelemente (25) am Synchronring (7) bei der Montage bleibend verformbar sind.

3. Synchronring aus Vollmaterial nach Anspruch 2, dadurch gekennzeichnet, daß die Anlagebereiche (28) der Auflageelemente (25) am Synchronring (7) bei der Montage der Ringfeder (24) durch seitliche Deformation der Auflageelemente (25) an die Ringfeder (24) anpaßbar sind.

4. Synchronring aus Vollmaterial nach Anspruch 2 oder 3, dadurch gekennzeichnet, daß die Anlagebereiche (28) der Auflageelemente (25) am Synchronring (7) bei der Montage der Ringfeder (24) durch von innen her wirkende Deformation der Auflageelemente (25) an die Ringfeder (24) anpaßbar sind.

5. Synchronring als Blechumformteil nach Anspruch 2, dadurch gekennzeichnet, daß die Auflageelemente (25) bei der Umformung des Synchronringes (7) ausgebildet sind und in einem der Umformschritte an die aufgelegte Ringfeder (24) anpaßbar sind.

6. Synchronring als Blechumformteil nach Anspruch 2, dadurch gekennzeichnet, daß die Auflageelemente (25) durch eine seitlich wirkende Deformation hergestellt und in einem der Umformschritte an die aufgelegte Ringfeder (24) anpaßbar sind.

7. Synchronring (7) mit offener Ringfeder (24), für eine Synchronisierungseinrichtung für Schaltgetriebe, mit zumindest drei umfangsmäßig voneinander beabstandeten Auflageelementen (25) am Synchronring (7) für die im wesentlichen spielfrei auf diesen aufliegende Ringfeder (24), dadurch gekennzeichnet, daß die offenen Enden (33) der Ringfeder (24) zum Ausgleich von Herstellungstoleranzen bei der Montage durch umfangsmäßige Anpassung an die Anlagebereiche (28) der Auflageelemente (25) relativ zueinander verstellbar und am Synchronring (7) fixierbar sind.

8. Synchronring nach Anspruch 7, dadurch gekennzeichnet, daß zur Fixierung der Enden (33) der offenen Ringfeder (24) bleibend verformbare Haltebereiche (34) am Synchronring (7) vorgesehen sind.

9. Synchronring nach einem der Ansprüche 7 oder 8, dadurch gekennzeichnet, daß die Ringfeder (24) auf Auflageelementen (25) gemäß einem der Ansprüche 1 bis 6 gehalten ist.

10. Synchronring nach einem oder mehreren der Ansprüche 1 bis 9, dadurch gekennzeichnet, daß die Ringfeder (24) mittels eines bleibend verformten Haltebereiches (34) auf dem Synchronring (7) unter Bildung einer Baugruppe unverlierbar gehalten ist.

## Claims

1. A synchronizing ring (7) with a closed annular spring (24), for a synchronizing device for gearboxes, with at least three mutually circumferentially spaced abutment elements (25) on the synchronizing ring (7) for the annular spring (24) resting thereon substantially without play, **characterized in that** the direct abutment regions (28) of the abutment elements (25) for the annular spring (24) are adjustable at least radially in order to neutralize manufacturing tolerances during assembly.

2. A synchronizing ring according to Claim 1, **characterized in that** the abutment regions (28) of the abutment elements (25) on the synchronizing ring (7) are permanently deformable during assembly.

3. A synchronizing ring of solid material according to Claim 2, **characterized in that** the abutment regions (28) of the abutment elements (25) on the synchronizing ring (7) are adaptable to the annular spring (24) by lateral deformation of the abutment elements (25) during the assembly of the annular spring (24).

4. A synchronizing ring of solid material according to Claim 2 or 3, **characterized in that** the abutment regions (28) of the abutment elements (25) on the synchronizing ring (7) are adaptable to the annular spring (24) by deformation - acting from the inside - of the abutment elements (25) during the assembly of the annular spring (24).

5. A synchronizing ring as a shaped sheet-metal part according to Claim 2, **characterized in that** the abutment elements (25) are formed during the shaping of the synchronizing ring (7) and are adaptable in one of the shaping steps to the annular spring (24) placed thereon.

6. A synchronizing ring as a shaped sheet-metal part according to Claim 2, **characterized in that** the abutment elements (25) are produced by a deformation acting laterally and are adaptable in one of the shaping steps to the annular spring (24) placed thereon.

7. A synchronizing ring (7) with an open annular spring (24), for a synchronizing device for gearboxes, with at least three mutually circumferentially spaced abutment elements (25) on the synchronizing ring (7) for the annular spring (24) resting thereon substantially without play, **characterized in that** the open ends (33) of the annular spring (24) are adjustable relative to one another in order to neutralize manufacturing tolerances during assembly by adaptation at the periphery to the abutment regions (28) of the abutment elements (25) and can be fixed on the synchronizing ring (7).

8. A synchronizing ring according to Claim 7, **characterized in that** permanently deformable retaining regions (34) are provided on the synchronizing ring (7) for fixing the ends (33) of the open annular spring (24).

9. A synchronizing ring according to one of Claims 7 or 8, **characterized in that** the annular spring (24) is held on abutment elements (25) according to one of Claims 1 to 6.

10. A synchronizing ring according to one or more of Claims 1 to 9, **characterized in that** the annular spring (24) is held captive on the synchronizing ring (7) by means of a permanently deformed retaining region (34) so as to form a sub-assembly.

## Revendications

1. Bague de synchronisation (7) à ressort annulaire fermé (24), pour un dispositif de synchronisation destiné à des boîtes de vitesses, comportant au moins trois éléments d'appui (25), écartés les uns des autres à la périphérie sur la bague de synchronisation (7), pour le ressort annulaire (24) posé sensiblement sans jeu sur ceux-ci, caractérisée en ce que les zones de contact directes (28) des éléments d'appui (25) pour le ressort annulaire (24) sont réglables du moins radialement pour compenser lors du montage des tolérances de fabrication.

2. Bague de synchronisation selon la revendication 1, caractérisée en ce que les zones de contact (28) des éléments d'appui (25) sur la bague de synchronisation (7) sont à déformation permanente lors du montage.

3. Bague de synchronisation en matériau massif selon la revendication 2, caractérisée en ce que les zones de contact (28) des éléments d'appui (25) sur la bague de synchronisation (7) sont ajustables au ressort annulaire (24) par déformation latérale des éléments d'appui (25) lors du montage du ressort annulaire (24).

4. Bague de synchronisation en matériau massif selon l'une ou l'autre des revendications 2 et 3, caractérisée en ce que les zones de contact (28) des éléments d'appui (25) sur la bague de synchronisation (7) sont ajustables au ressort annulaire (24) par une déformation agissant depuis l'intérieur des éléments d'appui (25) lors du montage du ressort annulaire (24).

5. Bague de synchronisation sous forme de pièce en tôle mise en forme selon la revendication 2, caractérisée en ce que les éléments d'appui (25) sont réalisés lors de la mise en forme de la bague de synchronisation (7) et ajustables au ressort annulaire posé (24) pendant l'une des étapes de mise en forme.

6. Bague de synchronisation sous forme de pièce en tôle mise en forme selon la revendication 2, caractérisée en ce que les éléments d'appui (25) sont réalisés par une déformation agissant latéralement et ajustables au ressort annulaire posé (24) pendant l'une des étapes de mise en forme.

7. Bague de synchronisation (7) à ressort annulaire ouvert (24), pour un dispositif de synchronisation destiné à des boîtes de vitesses, comportant au moins trois éléments d'appui (25) écartés les uns des autres à la périphérie sur la bague de synchronisation (7) pour le ressort annulaire (24) posé sensiblement sans jeu sur ceux-ci, caractérisée en ce que les extrémités ouvertes (33) du ressort annulaire (24) sont réglables l'une par rapport à l'autre par ajustement périphérique aux zones de contact (28) des éléments d'appui (25) pour compenser lors du montage des tolérances de fabrication, et en ce qu'elles sont susceptibles d'être fixées sur la bague de synchronisation (7).

8. Bague de synchronisation selon la revendication 7, caractérisée en ce qu'il est prévu, pour fixer les extrémités (33) du ressort annulaire ouvert (24), des zones de maintien (34) à déformation permanente sur la bague de synchronisation (7).

9. Bague de synchronisation selon l'une ou l'autre des revendications 7 et 8, caractérisée en ce que le ressort annulaire (24) est maintenu sur des éléments d'appui (25) selon l'une quelconque des revendications 1 à 6.

10. Bague de synchronisation selon l'une ou plusieurs des revendications 1 à 9, caractérisée en ce que le ressort annulaire (24) est maintenu de façon imperdable sur la bague de synchronisation (7) par une zone de maintien (34) à déformation permanente, en formant un groupe structurel.
